# FASCICULE DE BREVET EUROPEEN

(11) **EP 0 478 433 B1**
(45) Date de publication et mention de la délivrance du brevet: **16.03.1994**
(21) Numéro de dépôt: 91402526.7
(22) Date de dépôt: 24.09.1991
(51) Int. Cl.: C03B 35/16, B65G 47/244

(54) **Dispositif pour orienter des vitrages pendant leur transport sur un transporteur à rouleaux**
Vorrichtung zum Orientieren von Glasscheiben während ihres Transports auf einem Rollentransporter
Apparatus for orienting glass-sheets during their transport on a roller-conveyor

(30) Priorité: 25.09.1990 DE 4030222
(43) Date de publication de la demande: 01.04.1992
(73) Titulaire: SAINT GOBAIN VITRAGE INTERNATIONAL, 92400 Courbevoie (FR); VEGLA Vereinigte Glaswerke GmbH, D-52066 Aachen (DE)
(72) Inventeur: Kuster, Hans-Werner, W-5100 Aachen (DE); Zilgens, Heinz-Günter, W-5132 Üb - Palenberg (DE); Diederen, Werner, W-5210 Herzogenrath (DE)
(74) Mandataire: Menes, Catherine

(56) Documents cités:
- DE-A- 2 531 838
- FR-A- 2 157 553
- US-A- 3 457 057
- US-A- 3 992 182
- US-A- 4 111 412
- US-A- 4 204 853
- US-A- 4 669 602
- US-A- 4 838 920

## Description

La présente invention concerne un dispositif pour orienter des vitrages pendant leur transport sur un transporteur à rouleaux.

Des fours de bombage à fonctionnement continu, dans lesquels les vitrages traversent une chambre de bombage dans laquelle un bombage cylindrique leur est conféré, ont une capacité de production relativement élevée. A l'entrée du four, les vitrages sont déposés en succession serrée sur un transporteur à rouleaux sur lequel ils traversent le four de bombage à vitesse relativement élevée. Pour que le bombage cylindrique souhaité soit conféré aux vitrages dans le sens prévu, il faut que ces vitrages soient orientés sur le transporteur à rouleaux.

Dans un dispositif d'orientation connu, des rails de guidage, formant chaque fois un angle aigu avec l'axe du transporteur à rouleaux, sont disposés des deux côtés, au-dessus des rouleaux de transport, et font glisser les vitrages dans une position centrale sur les rouleaux de transport par contact glissant avec les bords latéraux de ces vitrages. Pendant le transport ultérieur en position centrale, le trajet des vitrages est limité, latéralement, par deux rails de guidage parallèles et, dans le sens du transport, par une butée disposée à côté de l'un de ces rails de guidage. Sous l'effet de cette butée latérale antérieure et de l'entraînement par les rouleaux de transport, le vitrage est tourné dans une position angulaire dans laquelle l'un de ses coins antérieurs touche l'un des rails de guidage latéraux et son coin postérieur opposé touche l'autre rail de guidage latéral (document US-PS-4 838 920). Dans ce dispositif d'orientation, le flux de transport continu des vitrages est interrompu par la butée disposée dans le chemin de transport des vitrages.

On connaît également un dispositif pour orienter les vitrages sur un transporteur à rouleaux dans lequel, de chaque côté du transporteur à rouleaux, est prévu un chariot accompagnant de manière synchrone le déplacement de chaque vitrage, sur lequel sont montés des coulisseaux mobiles dans le sens transversal à celui du transport, qui sortent chaque fois dans une mesure prédéterminée pendant le déplacement synchrone du chariot, et amènent ainsi le vitrage dans la position souhaitée (document US-PS-3 992 182). Un dispositif d'orientation de ce type est relativement onéreux.

Il est, en outre, connu de monter, des deux côtés d'un transporteur horizontal, transversalement à la direction de transport, des rails de centrage mobiles qui s'avancent successivement vers l'axe du transporteur et alignent le vitrage dans l'axe du transporteur (document DE-25 31 838 C2).

Il est par ailleurs connu du brevet US-4 669 602 de faire pivoter, de préférence autour de leur centre de gravité, des produits se déplaçant sur un lit de rouleaux en rotation. Cette réorientation s'effectue à l'aide d'un arbre en rotation placé dans le plan de convoyage et muni d'une bague latérale permettant de soulever et d'accélérer légèrement un des bords du produit en coopération avec des guide-coulisseaux.

L'invention a pour but de procurer un dispositif pour orienter les vitrages au moyen duquel l'orientation des vitrages en position voulue sur le transporteur à rouleaux puisse être réalisée par des moyens simples, même en présence de vitesses de transport relativement élevées des vitrages et d'une succession serrée de ces vitrages sur le transporteur à rouleaux, sans que le flux de transport continu des vitrages soit interrompu.

Le dispositif conforme à l'invention est caractérisé par un rail monté au-dessus des rouleaux de transport formant un petit angle horizontal par rapport à la direction de transport et orientant un bord latéral des vitrages pendant leur avancement, et par une bague montée en aval du rail sur un arbre entraîné. Le diamètre extérieur de la bague est supérieur à celui des rouleaux de transport et sa position sur l'arbre est choisie telle qu'elle accélère un côté des vitrages, par contact de friction avec leur surface inférieure, en dehors du centre de gravité de ces vitrages.

Dans le dispositif conforme à l'invention, le processus d'orientation est ainsi divisé en deux mouvements ou déplacements des vitrages séparés dans le temps, chacun de ces mouvements partiels étant effectué à l'aide de moyens relativement simples, même dans le cas de vitrages se déplaçant en continu. Il est ainsi possible de procéder à une orientation précise des vitrages, même en cas de très grandes vitesses de transport de ceux-ci.

L'orientation du bord latéral qui s'étend en substance dans la direction de transport est effectuée à l'aide du rail monté fixe dans le plan de transport, qui forme, par exemple, un angle horizontal de 2 à 5 degrés par rapport à la direction de transport. Les vitrages qui sont toujours déposés au même endroit et à peu près dans la même position angulaire sur le transporteur à rouleaux à l'aide d'une machine d'alimentation automatique, sont en contact avec ce rail par leur bord latéral correspondant sur leur trajet. Ils sont déplacés sur les rouleaux lors de leur mouvement glissant le long du rail du fait que ce rail est monté en oblique par rapport à la direction de transport au point que le bord latéral glissant le long du rail présente, au plus tard au bout du rail, l'orientation prédéterminée par celui-ci, tant en ce qui concerne leur position transversalement à la direction de transport que leur position angulaire. Cette opération d'orientation s'effectue tout à fait indépendamment de la vitesse de transport des vitrages et de l'espacement relatif des vitrages successifs.

L'opération suivante qui sert à modifier volontairement la position angulaire des vitrages sur le transporteur à rouleaux peut également être effectuée à une cadence rapide voulue à l'aide de la bague d'entraînement montée sur l'arbre tournant et agissant sur les vitrages par contact de friction en dehors de leur centre de gravité. Les vitrages sont soulevés d'un côté par cette bague d'entraînement et sont, à cet endroit, transportés à une vitesse accrue en rapport avec le diamètre de la bague d'entraînement alors que, de l'autre côté, les vitrages reposent sur les rouleaux de transport et sont transportés à la vitesse périphérique des rouleaux de transport. Ces vitesses différentes aboutissent au mouvement de rotation souhaité.

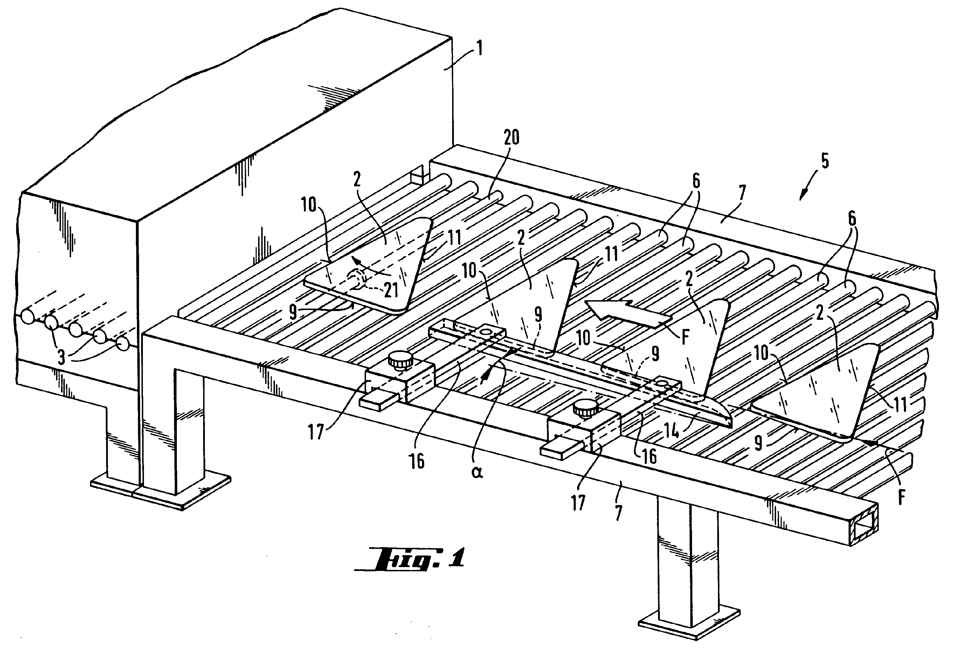

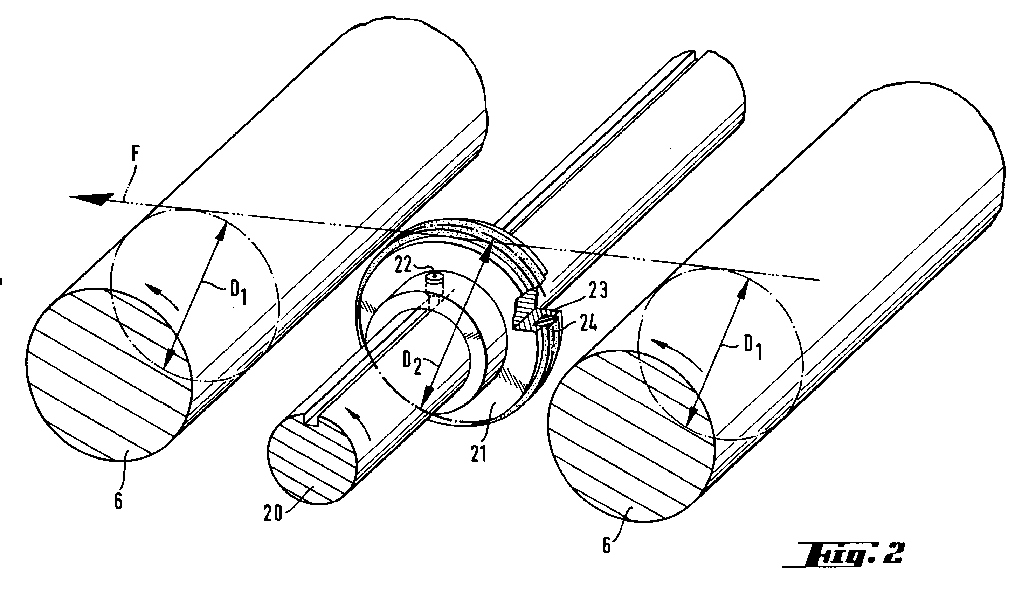

Un exemple de réalisation préférée d'un tel dispositif sera davantage décrit ci-après en référence aux dessins annexés qui représentent :
. **figure 1** : une vue d'ensemble en perspective du poste d'orientation conforme à l'invention,
. **figure 2** : un détail de la figure 1, à plus grande échelle.

Dans le four continu horizontal 1, les vitrages 2 sont chauffés jusqu'à leur température de bombage d'environ 650 degrés C. Le transport des vitrages 2 est assuré par des rouleaux de transport 3 qui sont entraînés de façon appropriée à la même vitesse. L'entraînement des rouleaux de transport 3 n'est pas illustré, par souci de clarté.

A l'extrémité du four continu 1 se trouve un poste de bombage fonctionnant en continu. Le poste de bombage ne fait pas l'objet de l'invention et n'est pas non plus illustré, par souci de simplicité. Un poste de bombage à fonctionnement continu peut présenter diverses structures. Il peut comporter un lit de conformation qui s'incurve de façon croissante dans le sens transversal au chemin de transport des vitrages. Un tel lit de conformation à courbure transversale croissante peut, par exemple, être formé par des rouleaux cintrés à courbure croissante sur lesquels tournent des gaines souples assurant le transport des vitrages, comme décrit par exemple dans le document DE-PS 26 21 902. Au lieu de cela, le poste de bombage peut aussi comporter un lit de conformation constitué de rouleaux de transport cylindriques montés en rotation dans des rails latéraux courbés vers le haut ou vers le bas selon le sens de transport des vitrages, de sorte que ceux-ci sont bombés selon leur sens de transport. Un tel poste de bombage est décrit, par exemple, dans le document EP-A-0 263 030.

Devant le four continu 1 se trouve le poste d'alimentation 5 qui comprend en substance le transporteur à rouleaux formé des rouleaux de transport 6. Les rouleaux de transport 6 sont situés dans le même plan que les rouleaux de transport 3 du four continu et sont entraînés à la même vitesse périphérique que ceux-ci. Un dispositif d'alimentation automatique non représenté prélève les vitrages 2 individuellement de piles de vitrages et les dépose chaque fois au même endroit sur le transporteur à rouleaux sur lequel ils sont amenés au four continu 1 dans le sens de la flèche F.

Dans le cas représenté, les vitrages 2 sont des vitrages triangulaires utilisés comme vitrages latéraux de véhicules automobiles. Les vitrages triangulaires 2 présentent un bord latéral 9 s'étendant approximativement dans la direction de transport lors de leur dépôt sur le transporteur à rouleaux, un bord antérieur 10 et un bord postérieur 11 formant chacun un angle différent de 90 degrés avec l'axe longitudinal du four. Il est évident qu'au lieu des vitrages triangulaires, des vitrages de n'importe quelle autre géométrie peuvent être bombés dans l'installation.

Peu après l'endroit de dépôt des vitrages 2, un rail rectiligne 14 est disposé, du côté du transporteur à rouleaux qui est adjacent au bord latéral 9 du vitrage, au-dessus des rouleaux de transport 6. Le rail 14 est articulé à deux barres de support 16 qui sont, pour leur part, montées déplaçables dans le sens transversal par rapport à la direction de transport dans des supports 17 fixés au bâti 7 du transporteur à rouleaux. De cette façon, la position du rail 14 peut être réglée et modifiée. Le rail 14 est par exemple orienté d'une façon telle que l'angle horizontal ALPHA qu'il forme avec la direction de transport soit d'environ 3 degrés. Les bords latéraux 9 des vitrages 2 s'appliquent, dans ces conditions, contre le rail 14, lorsqu'ils entrent en contact avec celui-ci sur leur trajet et sont orientés de telle façon qu'immédiatement après avoir quitté le rail 14, ils occupent toujours la même position angulaire déterminée par le rail 14, sur le transporteur à rouleaux.

Dans la zone du transporteur à rouleaux située en aval du rail 14, un des rouleaux de transport est remplacé par un arbre 20 qui est entraîné à la même vitesse angulaire que les rouleaux de transport 6. Sur cet arbre 20 qui est représenté en détail sur la figure 2, un disque cylindrique 21 est monté déplaçable selon l'axe de l'arbre 20. Le disque cylindrique est fixé à l'endroit voulu sur l'arbre 20 à l'aide d'une vis 22. Sur la face périphérique du disque cylindrique 21, une bague en caoutchouc 24 est disposée dans une gorge périphérique 23. Le diamètre extérieur D₂ de la bague en caoutchouc 24 est supérieur au diamètre D₁ des rouleaux de transport 6. Par conséquent, pour la même vitesse de rotation des rouleaux de transport 6 et de l'arbre 20, la vitesse périphérique de la bague en caoutchouc 24 est supérieure à la vitesse périphérique des rouleaux de transport 6.

Comme déjà mentionné, en déplaçant le disque cylindrique 21 axialement sur l'arbre 20 et, éventuellement, en utilisant des bagues en caoutchouc 24 d'un autre diamètre, on peut modifier l'importance de la rotation angulaire produite par ce dispositif pour répondre aux diverses exigences.

## Revendications

1. Dispositif pour orienter des vitrages pendant leur transport sur un transporteur à rouleaux entraînés en rotation, **caractérisé par** un rail (14) monté au-dessus des rouleaux de transport (6) formant un petit angle horizontal (ALPHA) par rapport à la direction de transport et orientant un bord (9) latéral des vitrages (2) glissant le long dudit rail (14) pendant leur transport, et par une bague (24) montée en aval du rail (14) sur un arbre (20) entraîné remplacant un rouleau de transport (6) et dont le diamètre extérieur (D₂) est supérieur à celui (D₁) des rouleaux de transport (6), et dont la position sur l'arbre (20) est choisie telle qu'elle agisse sur les vitrages (2) par contact de friction avec leur surface inférieure en dehors du centre de gravité de ces vitrages (2), de façon à accélérer un côté des vitrages (2), aboutissant à leur mouvement angulaire souhaité.

2. Dispositif suivant la revendication 1, **caractérisé en** **ce que** le rail (14) est monté déplaçable dans le sens transversal à la direction de transport des vitrages (2).

3. Dispositif suivant les revendications 1 et 2, **carac****térisé en ce que** l'angle (ALPHA) formé entre le rail (14) et la direction de transport est de 2 à 5 degrés.

4. Dispositif suivant les revendications 1 à 3, **carac****térisé en ce que** l'arbre (20) portant la bague (24) est entraîné à la même vitesse de rotation que les rouleaux de transport (6).

5. Dispositif suivant l'une quelconque des revendications 1 à 4, **caractérisé en ce que** la position de la bague (24) sur l'arbre (20) peut être modifiée.

## Patentansprüche

1. Vorrichtung zum Ausrichten von Glasscheiben während ihres Transports auf einem aus in Drehung versetzten Rollen bestehenden Förderer, **gekennzeichnet** durch eine oberhalb der Transportrollen (6) angeordnete, in Bezug auf die Transportrichtung einen kleinen horizontalen Winkel (ALPHA) bildende Schiene (14), die eine Seitenkante (9) der an der Schiene (14) während des Transports entlanggleitenden Glasscheiben (2) ausrichtet, sowie durch einen stromabwärts der Schiene (14) auf einer angetriebenen, eine Transportrolle (6) ersetzenden Welle (20) angeordneten Ring (24), dessen äußerer Durchmesser (D2) größer ist als der Durchmesser (D1) der Transportrollen (6), und dessen Position auf der Welle (20) so gewählt ist, daß der außerhalb des Schwerpunktes der Glasscheiben (2) durch Reibungsschluß mit der unteren Oberfläche der Glasscheiben auf diese Glasscheiben (2) einwirkt, eine Seite der Glasscheiben (2) beschleunigt und so ihre gewünschte Winkelbewegung herbeiführt.

2. Vorrichtung nach Anspruch 1, dadurch gekennzeichnet, daß die Schiene (14) quer zur Transportrichtung der Glasscheiben (2) verschiebbar gelagert ist.

3. Vorrichtung nach Anspruch 1 oder 2, dadurch gekennzeichnet, daß der Winkel (ALPHA) zwischen der Schiene (14) und der Transportrichtung 2 bis 5 Grad beträgt.

4. Vorrichtung nach Anspruch 1 bis 3, dadurch gekennzeichnet, daß die den Ring (24) tragende Welle (20) mit derselben Drehgeschwindigkeit angetrieben ist wie die Transportrollen (6).

5. Vorrichtung nach einem der Ansprüche 1 bis 4, dadurch gekennzeichnet, daß die Lage des Ringes (24) auf der Welle (20) veränderbar ist.

## Claims

1. Device for orientating panes during their conveying on a conveyor having rotationally driven rollers, characterized by a rail (14) mounted above the conveying rollers (6) and making a small horizontal angle (ALPHA) to the direction of conveying and orientating one lateral edge (9) of the panes (2) sliding along said rail (14) during their conveying, and by a ring (24) mounted downstream of the rail (14) on a driven shaft (20) in place of a conveying roller (6), and the external diameter (D₂) of which is larger than the external diameter (D₁) of the conveying rollers (6), and the position of which on the shaft (20) is chosen so that it acts upon the panes (2) by frictional contact with their lower surface outside the centre of gravity of these panes (2), in such a manner as to accelerate one side of the panes (2), leading to the desired angular movement of them.

2. Device according to Claim 1, characterized in that the rail (14) is mounted displaceable in the direction transverse to the conveying direction of the panes (2).

3. Device according to Claims 1 and 2, characterized in that the angle (ALPHA) that the rail (14) makes with the conveying direction is from 2 to 5 degrees.

4. Device according to Claims 1 to 3, characterized in that the shaft (20) carrying the ring (24) is driven at the same rotational speed as the conveying rollers (6).

5. Device according to any one of Claims 1 to 4, characterized in that the position of the ring (24) on the shaft (20) can be modified.
